Europäisches Patentamt

European Patent Office

Office européen des brevets

(11) Veröffentlichungsnummer: **0 168 688**
A2

## (12) EUROPÄISCHE PATENTANMELDUNG

(21) Anmeldenummer: 85107943.4

(22) Anmeldetag: 26.06.85

(51) Int. Cl.⁴: **B 60 B 21/12,** B 60 C 17/04, B 60 C 25/00

(30) Priorität: **19.07.84 DE 3426605**

(43) Veröffentlichungstag der Anmeldung: **22.01.86 Patentblatt 86/4**

(84) Benannte Vertragsstaaten: **AT BE CH DE FR GB IT LI LU NL SE**

(71) Anmelder: **Continental Gummi-Werke Aktiengesellschaft, Königsworther Platz 1, D-3000 Hannover 1 (DE)**

(72) Erfinder: **Spitz, Wolfgang, Dipl.-Ing., Nötelweg 5, D-3000 Hannover 91 (DE)**

(54) **Fahrzeugrad.**

⑤ Die Erfindung bezieht sich auf ein luftbereiftes Fahrzeugrad mit einer starren Felge, die radial außen ein Reifenstützteil aufweist, das den größten Felgendurchmesser bestimmt. Um bei einem Reifen mit vorgegebenen Kernringen eine Felge mit möglichst großem Stützteildurchmesser montieren zu können, wird vorgeschlagen, daß das Reifenstützteil zumindest eine im wesentlichen quer verlaufende Nut aufweist, in die ein Reifenwulst eintauchbar ist.

ACTORUM AG

0168688

Continental Gummi-Werke AG, Hannover

Fahrzeugrad

Die Erfindung betrifft ein luftbereiftes Fahrzeugrad mit einer starren Felge, die seitlich außen Felgenhörner, axial innen davon Sitzflächen für den Reifen und radial außen ein Reifenstützteil aufweist, das den größten Felgendurchmesser bestimmt, und mit einem Fahrzeugluftreifen, der im wesentlichen aus Gummi oder gummiähnlichen Kunststoffen besteht und eine Karkasse aus textilen und/oder metallischen Festigkeitsträgern aufweist, die in den Wülsten mittels zugfester Kerne verankert ist.

Ein solches Fahrzeugrad ist z.B. aus der DE-OS 30 00 428 bekannt. Es ist unter anderem bestens dazu geeignet, auch im Defektfall den Fahrbetrieb noch fortzuführen, ohne daß der Reifen dabei dauerhaften Schaden nimmt. Zum Abstützen des Reifens bei einem Notlauf dient ein Reifenstützteil, das sich radial außen an der Felge befindet.

Bei der Montage von Reifen auf einteilige Felgen mit einem solchen Reifenstützteil besteht die grundsätzliche Schwierigkeit, den Reifen mit seinem Wulstbereich über die Felge hinwegzubewegen. In der DE-OS 32 33 441 wird ein Verfahren zur Montage eines Reifens auf derartige Felgen beschrieben. Dabei wird im wesentlichen die Felge zunächst etwa senkrecht auf den Reifen zubewegt, unter ovaler Verformung des einen Reifenwulstes in den Innenraum des Reifens gebracht und dann gedreht, bis die Rotationsachsen von Reifen und Felge parallel verlaufen.

Auch bei dem vorbeschriebenen Verfahren sind der Wahl des Stützteildurchmessers vor allem durch den Durchmesser des Reifenwulstes Grenzen

- 2 -

gesetzt. In einer älteren Anmeldung (P 33 41 043.7) werden Wertangaben beschrieben, denen der maximale Durchmesser des Stützteils einer Felge entnehmbar ist.

Der Erfindung liegt die Aufgabe zugrunde, ein luftbereiftes Fahrzeugrad der eingangs genannten Art anzugeben, bei dem eine Montierbarkeit des Reifens erhalten bleibt und das Reifenstützteil der Felge einen bisher nicht erreichten Durchmesser aufweisen kann.

Diese Aufgabe wird erfindungsgemäß dadurch gelöst, daß das Reifenstützteil zumindest eine im wesentlichen quer verlaufende Nut aufweist, in die ein Reifenwulst eintauchbar ist.

Die Erfindung bietet den Vorteil, daß aufgrund der bisher nicht erreichten Stützteildurchmesser ein größerer radialer Abstand zwischen dem Wulstbereich des Reifens und der Stützfläche des Reifenstützteils gewählt werden kann, so daß sich bei einem Notlauf eine geringere Seitenwandbeanspruchung für den Reifen ergibt. Weiterhin müssen geringere Differenzen zwischen dem normalen Lauffächendurchmesser und dem Stützteildurchmesser ausgeglichen werden.

Die Nut in dem Reifenstützteil kann gleichzeitig als Warnsystem ausgenutzt werden, indem sie bei einem Notlauf ein "Holpern" erzeugt. Durch eine Schrägstellung der Nut, d.h. durch eine Abweichung vom exakten Querverlauf, läßt sich die Geräuschabgabe dosieren, weil dann nicht die gesamte Nut zu gleicher Zeit auf die Fahrbahn auftrifft.

Wenn es gewünscht wird, können die Nuten nach dem Einführen der Felge teilweise oder vollständig verschlossen werden, z.B. durch Anbringen von Füllkörpern aus Gummi oder Kunststoff.

Gemäß einer weiteren Ausgestaltung der Erfindung ist ein Reifenstützteil, bevorzugt ein zwei- oder dreiteiliges Stützteil, auch nach dem teilweisen Einführen der Felge in den Reifeninnenraum montierbar, indem die einzelnen Teile des Reifenstützteils derart auf dem Felgen-

- 3 -

kranz befestigt werden, daß zwischen ihnen eine Nut von etwa der Breite eines Reifenwulstes verbleibt.

Weitere vorteilhafte Ausgestaltungen der Erfindung sind den Unteransprüchen zu entnehmen.

Nachfolgend werden mehrere Ausführungsbeispiele der Erfindung anhand einer Zeichnung beschrieben.

Es zeigt

Fig. 1 ein Fahrzeugrad, bei dem ein Reifenstützteil aus Gummi oder Kunststoff am Felgenkranz angebracht ist, in einem radialen Teilschnitt,

Fig. 2 eine teilweise in einen Reifen eingeführte Felge, wobei sich der Reifenwulst in der Nut befindet,

Fig. 3 eine Felge mit einer Nut im Reifenstützteil, die schräg zur Querrichtung verläuft, in einer Draufsicht,

Fig. 4 eine Felge mit einem Reifenstützteil aus Federblech, das durch Klemmung am Felgenkranz befestigt ist, in einem radialen Teilschnitt,

Fig. 5 eine Felge mit einem Reifenstützteil, das am Felgenkranz angeschraubt ist, in einem radialen Teilschnitt,

Fig. 6 eine Felge mit einem Reifenstützteil, das durch Klemmung im Tiefbett an der Felge befestigt ist, in einem radialen Teilschnitt,

Fig. 7 ein Fahrzeugrad, bei dem der Reifen radial außen an der Felge angeordnet ist und bei dem sich ein Reifenstützteil mit einer Nut in einem Felgentiefbett be-

0168688

- 4 -

findet, in einem radialen Teilschnitt,

Fig. 8 das Fahrzeugrad gemäß Fig. 7 in einem Schnitt in der
Ebene VIII - VIII.

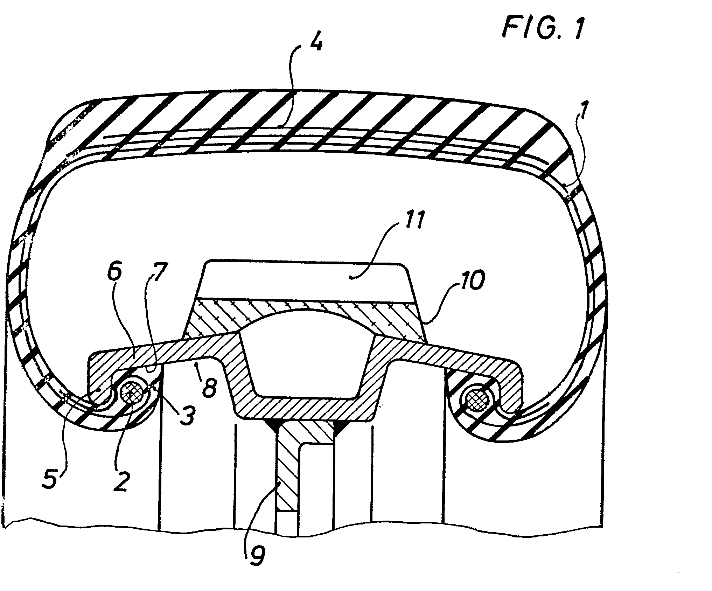

In Figur 1 ist ein Fahrzeugrad mit einem montierten Reifen dargestellt.
Ein im wesentlichen aus Gummi oder gummiähnlichen Kunststoffen bestehender Fahrzeugluftreifen ist vorliegend als Gürtelreifen mit einer
Radialkarkasse 1 ausgebildet, die mit ihren Enden durch Umschlingen
von zug- und druckfesten Kernringen 2 in den Wülsten 3 verankert ist.
Zwischen dem Laufstreifen und der Karkasse 1 befindet sich ein üblicher
Gürtel 4.

Die starre, einteilig ausgebildete Felge weist seitlich außen Felgenhörner 5 und neben diesen auf der radial inneren Seite des Felgenkranzes 6 Sitzflächen 7 für den Reifen auf. Axial innen von den Sitzflächen 7 befinden sich Montagevertiefungen 8. Der Felgenkranz 6 ist
in üblicher Weise an einer Radscheibe 9 befestigt.

Radial außen vom Felgenkranz 6 ist an diesem ein Reifenstützteil 10
angeordnet, das vorliegend ringförmig ausgebildet ist, aus Gummi oder
Kunststoff besteht und unlösbar mit dem Felgenkranz 6 verbunden ist.
Bei Bedarf kann der Felgenkranz 6 derart gestaltet sein, daß das Reifenstützteil 10 ein Teil desselben ist. Am äußeren Umfang des Stützteils 10 befindet sich zumindest eine vorliegend axakt quer verlaufende
Nut 11 zur Aufnahme des einen Reifenwulstes bei der Montage des
Reifens. Bei Bedarf kann der Verlauf der Nut 11 von der exakten Querrichtung abweichen, wobei die Abweichung jedoch in keinem Fall mehr
als 45$^o$ betragen sollte. Der Grund der Nut 11 kann im Querschnitt
gerade oder gewölbt verlaufen und etwa auf der gleichen Höhe liegen wie
die seitlich und radial äußeren Teile des Felgenkranzes 6.

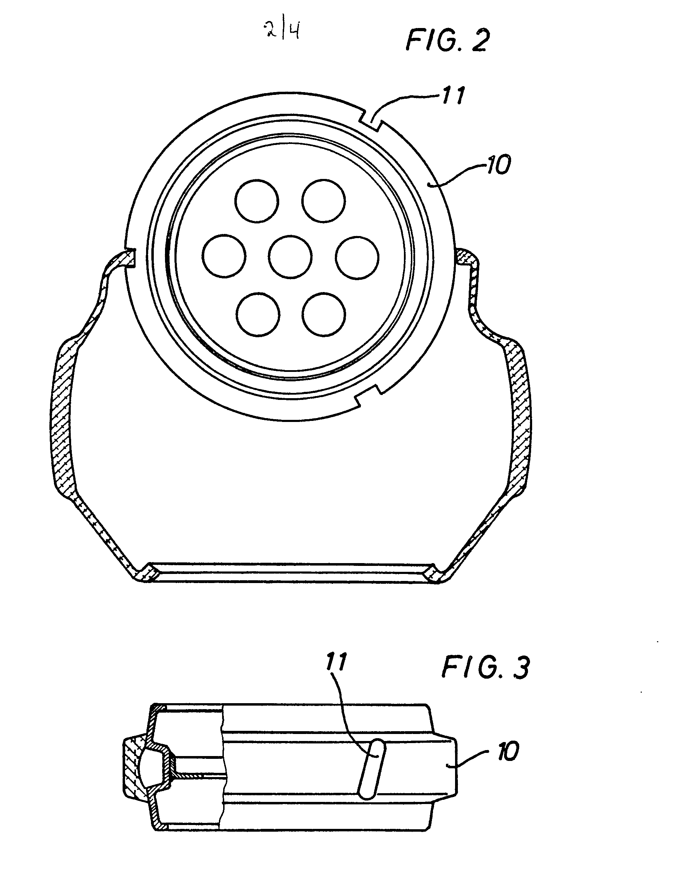

Anhand der Figur 2 soll die Montage eines Reifens auf eine erfindungsgemäße Felge erläutert werden. Bezüglich des im wesentlichen senkrechten Einführens der Felge in den Reifen und der dabei erfolgenden
ovalen Verformung des einen Reifenwulstes gelten die gleichen Verfahrensschritte, wie sie in der DE-OS 32 33 441 ausführlich beschrieben sind. Der wesentliche Unterschied besteht beim vorliegenden Fahrzeugrad darin, daß beim Einführen der Felge zunächst ein Wulstabschnitt des Reifens in eine Nut 11 des Reifenstützteils 10 eingebracht wird. Wenn die Felge so weit in den Reifen hineingeschoben ist, daß sie mit ihrem größten Durchmesser den vorderen Reifenwulst 3 passiert hat, wird der Wulstabschnitt aus der Nut 11 entfernt, und die Felge kann im Reifeninnenraum gedreht werden, bis ihre Rotationsachse parallel zur Achse des Reifens verläuft.

Die Felge gemäß Figur 3 stimmt im wesentlichen mit der des Fahrzeugrads nach Figur 1 überein. Unterschiedlich ist lediglich der gegenüber der exakten Querrichtung leicht geneigte Verlauf der Nut 11.

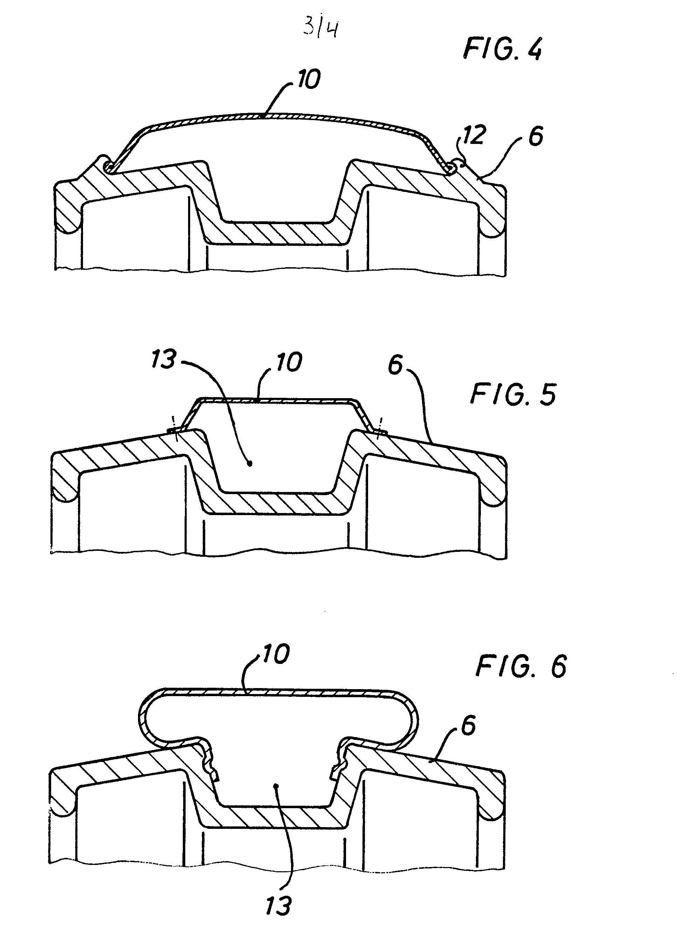

In den Figuren 4 bis 6 sind weitere Felgen dargestellt, bei denen ein Reifen mit seinen Wülsten am radial inneren Umfang befestigt wird und bei denen sich radial außen mehrteilige, vom Felgenkranz 6 lösbare Reifenstützteile 10 befinden. Die Reifenstützteile 10 bestehen bevorzugt aus zwei oder drei in Umfangsrichtung hintereinander angeordneten Teilen, wobei zwischen den einzelnen Teilen Abstände verbleiben, die als Nuten zur Einführung eines Reifenwulstes 3 bei der Reifenmontage dienen. Das Reifenstützteil 10 bei der Felge der Figur 4 besteht aus einem dünnen, gewichtssparenden Federblech, welches durch Klemmung an Vorsprüngen 12 des Felgenkranzes 6 befestigt ist. Bei einem Notlauf des Reifens kann dieses Reifenstützteil 10 eine selbständige Federungsfunktion übernehmen.

Bei der Felge der Figur 5 deckt das Reifenstützteil 10 im wesentlichen ein Tiefbett 13 ab, und es ist z.B. durch Schraubverbindung an den seitlichen Teilen des Felgenkranzes 6 befestigt.

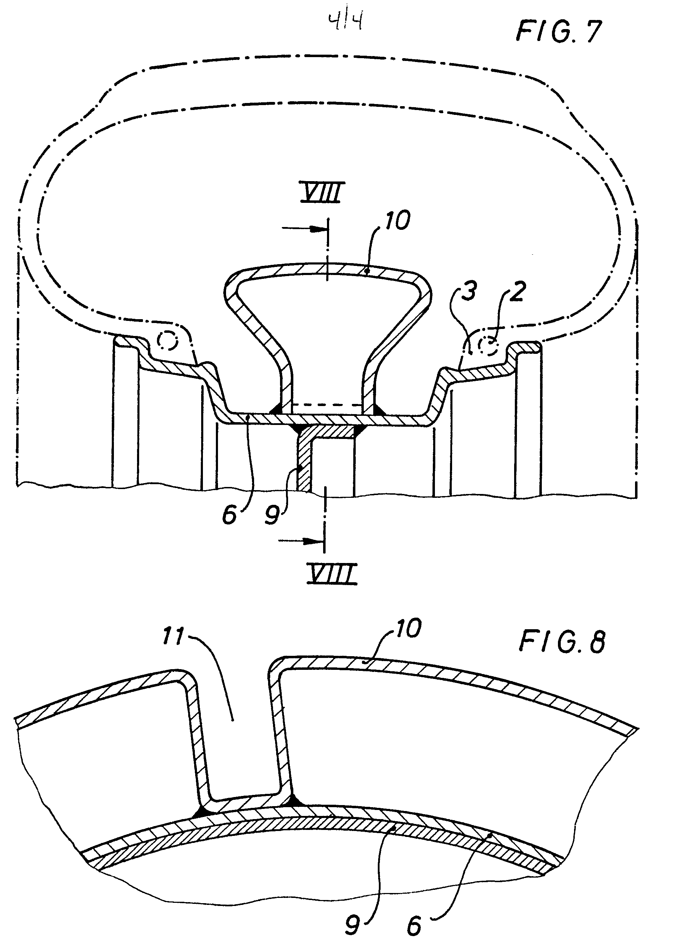

Figur 6 zeigt eine Felge, bei der ebenfalls ein Reifenstützteil 10 ein Tiefbett 13 abdeckt, jedoch erstreckt sich das Stützteil 10 seitlich weiter über die benachbarten Teile des Felgenkranzes 6, so daß eine größere Notlaufstützfläche gebildet wird. Das Stützteil 10 ist durch Klemmung in seitlichen Wandteilen des Tiefbetts 13 am Felgenkranz 6 befestigt.

- 6 -

Den Reifenstützteilen 10 der Figuren 4 bis 6 ist gemeinsam, daß sie sowohl vor einer Reifenmontage als auch nach dem teilweisen Einführen einer Felge montiert werden können.

In Figur 7 ist ein Fahrzeugrad dargestellt, bei dem der Reifen mit seinen Wülsten 3 radial außen an der Felge angeordnet ist. In einem Tiefbett 13 der Felge befindet sich wiederum ein Reifenstützteil 10, das vorliegend unlösbar mit der Felge verbunden, z.B. verschweißt ist. Zur Überwindung des Stützteils 10 bei der Reifenmontage weist das Stützteil 10 wiederum zumindest eine Nut 11 (s. Figur 8) auf, die einen Reifenwulst 3 aufnehmen kann. Das Einführen der Felge in den Reifen und das anschließende Drehen erfolgt in der oben beschriebenen Weise.

Ansprüche

1. Luftbereiftes Fahrzeugrad mit einer starren Felge, die seitlich außen Felgenhörner, axial innen davon Sitzflächen für den Reifen und radial außen ein Reifenstützteil aufweist, das den größten Felgendurchmesser bestimmt, und mit einem Fahrzeugluftreifen, der im wesentlichen aus Gummi oder gummiähnlichen Kunststoffen besteht und eine Karkasse aus textilen und/oder metallischen Festigkeitsträgern aufweist, die in den Wülsten mittels zugfester Kerne verankert ist, dadurch gekennzeichnet, daß das Reifenstützteil (10) zumindest eine im wesentlichen quer verlaufende Nut (11) aufweist, in die ein Reifenwulst (3) eintauchbar ist.

2. Fahrzeugrad nach Anspruch 1, dadurch gekennzeichnet, daß die Nut (11) exakt in Querrichtung oder zur Querrichtung geneigt verläuft, wobei die Neigung weniger als 45° beträgt.

3. Fahrzeugrad nach Anspruch 1, dadurch gekennzeichnet, daß der Grund der Nut (11) im Felgenquerschnitt gerade oder gewölbt verläuft.

4. Fahrzeugrad nach Anspruch 1, dadurch gekennzeichnet, daß die Nut (11) als Warnsystem dient.

5. Fahrzeugrad nach Anspruch 1, dadurch gekennzeichnet, daß bei der montierten Felge der Raum der Nut (11) mit einem Füllmaterial verschlossen ist.

6. Fahrzeugrad nach Anspruch 1, dadurch gekennzeichnet, daß das Reifenstützteil (10) aus Metall, Gummi oder Kunststoff besteht.

7. Fahrzeugrad nach Anspruch 1, dadurch gekennzeichnet, daß das Reifenstützteil (10) aus zwei oder drei mit gegenseitigem Abstand zueinander in Umfangsrichtung angeordneten Teilen besteht und daß die Zwischenräume als Nuten (11) dienen.

- 8 -

8. Fahrzeugrad nach Anspruch 1, dadurch gekennzeichnet, daß das Reifenstützteil (10) als Teil des Felgenkranzes (6) ausgebildet ist.

9. Fahrzeugrad nach Anspruch 1, dadurch gekennzeichnet, daß das Reifenstützteil (10) lösbar mit dem Felgenkranz (6) verbunden ist.

10. Fahrzeugrad nach Anspruch 9, dadurch gekennzeichnet, daß das Reifenstützteil (10) aus Federblech besteht.

11. Fahrzeugrad nach Anspruch 1, dadurch gekennzeichnet, daß der Mutengrund und der seitlich und radial äußere Teil des Felgenkranzes (6) etwa auf gleicher Höhe liegen.

Hannover, den 17. Juli 1984
84-43 P/Sr           Sr/Fr

84 - 43 P

1/4

FIG. 1

Continental
Gummi - Werke AG
Hannover

2|4   *FIG. 2*

*FIG. 3*

Continental
Gummi-Werke AG
Hannover

84-43P

0168688

3/4

FIG. 4

10

12   6

13   10   6

FIG. 5

10

FIG. 6

6

13

Continental
Gummi-Werke AG
Hannover

84-43P

0168688

FIG.7

FIG.8

Continental
Gummi - Werke AG
Hannover

84-43P